# EUROPEAN PATENT APPLICATION

(11) **EP 3 677 930 A1**
(43) Date of publication of application: **08.07.2020**
(21) Application number: 17926670.5
(22) Date of filing: 28.09.2017
(51) Int. Cl.: G01S 19/12

(54) **DATA TRANSMISSION METHOD, SERVER AND BASE STATION**

(71) Applicant: Huawei Technologies Co., Ltd., Longgang District Shenzhen, Guangdong 518129 (CN)
(72) Inventor: LI, Chenwan, Shenzhen Guangdong 518129 (CN); LIN, Bo, Shenzhen Guangdong 518129 (CN); XUE, Jiantao, Shenzhen Guangdong 518129 (CN)
(74) Representative: Pfenning, Meinig & Partner mbB
(86) International application number: PCT/CN2017/104133
(87) International publication number: WO 2019/061208

(57) **Abstract**

This application relates to the field of positioning technologies, and specifically to a data transmission method, a server, and a base station. The method includes: receiving, by a base station, a first message sent by a server, where the first message carries a first data packet including positioning assistance data; and broadcasting, by the base station, the first data packet in the first message to a terminal, to enable the terminal to calibrate and calculate positioning information of the terminal based on the positioning assistance data. In this application, the positioning assistance data sent to the terminal is sent by being divided into a plurality of first messages, thereby making full use of a spectrum resource. In addition, a division manner can ensure that the positioning assistance data can be integrally sent to the terminal, thereby completing calibration of a location by the terminal.

## Description

### TECHNICAL FIELD

This application relates to the field of positioning technologies, and specifically to a data transmission method, a server, and a base station.

### BACKGROUND

A global positioning system (global positioning system, GPS for short) is a positioning and navigation system of high-precision, and is widely applied to the various walks of life. However, due to impacts of an error of a satellite clock, an error of an ephemeris, an error of an ionosphere, and the like, precision that the system can reach is at a ten-meter level. Positioning of a higher precision level is necessary to satisfy application scenarios such as a drone, smart driving, and a vertical market. Introduction of technologies such as real time kinematic (real time kinematic, RTK for short) may effectively improve the positioning precision, and positioning precision of the RTK can reach a centimeter level.

An RTK server obtains, by using a reference station, reference data, such as a third-party correction number. Next, user equipment (user equipment, UE for short) that is going to perform positioning reports a GPS location of the UE to the RTK server. Then, the RTK server calculates a correction number based on the received data of the reference station and location information with a coarse granularity of the UE, and sends the correction number to the UE; and the UE calculates a location of high-precision by using the correction number and an obtained GPS location.

However, in the RTK technology, the correction number is unicasted as application layer data, and in this case, spectrum resource utilization efficiency is relatively low.

### SUMMARY

Embodiments of this application provide a data transmission method, a server, and a base station, to resolve a problem of low spectrum utilization efficiency in the current RTK positioning technology.

According to a first aspect, an embodiment of this application provides a data transmission method. In the method, a base station receives a first message sent by a server, where the first message carries a first data packet including positioning assistance data; and the base station broadcasts the first data packet in the first message to a terminal, so that after receiving first data packets in a plurality of first messages, the terminal obtains the positioning assistance data by extraction, and calibrates positioning information of the terminal based on the positioning assistance data.

It can be learned that, the sending is performed in a broadcast manner, the broadcast manner has a relatively strict requirement for a size of a data block, and an integral piece of positioning assistance data is greater than the size of the data block. Therefore, to perform the broadcasting, the positioning assistance data sent to the terminal is sent by being divided into a plurality of first data packets, thereby making full use of a spectrum resource. In addition, a division manner can ensure that the positioning assistance data can be integrally sent to the terminal, thereby completing calibration of a location by the terminal.

In some embodiments, each first message carries a first identifier. The first identifier is mainly used to identify the first data packet in the first message. That is, when the positioning assistance data includes a plurality of first data packets, the first data packets obtained by division need to be sorted based on a sequence of the positioning assistance data, and the first identifier identifies a location of each first data packet in the positioning assistance data. That is, the first identifier may be a sequence number of each first data packet when the positioning assistance data is divided into the plurality of first data packets.

In some embodiments, the first message further carries a data type of the positioning assistance data in the first message, and the data type is used to distinguish between different types of the positioning assistance data.

In some embodiments, the first message further carries a data type of the first message. The data type is a data type determined based on a type of a global navigation satellite system (global navigation satellite system, GNSS for short), different GNSSs correspond to different data types, and different GNSSs may include different data, thereby supporting data of diverse different GNSS systems.

In some embodiments, the data type is a data type determined based on the GNSS type and a positioning type, and the GNSS type includes different positioning types, so that a same GNSS type and different positioning types can correspond to different data types, classification of the data type is more refined, information that the data type can reflect is more abundant, no additional transmission resource is added, and transmission of first messages of different data types is easier.

In some embodiments, the data type is a data type determined based on the GNSS type, a transmission frequency band, and the positioning type. That is, different data types can further correspond to different frequency bands, so that a same GNSS and a same positioning type and different frequency bands can correspond to different data types, classification of the data type is more refined, information that the data type can reflect is more abundant, no additional transmission resource is added, and transmission of first messages of different data types is easier.

In some embodiments, the data type may alternatively be a type determined based on different first parameters.

In some embodiments, the first message further includes a null packet indication, and the first message including the null packet indication does not include the positioning assistance data. The first message of this type may not include the positioning assistance data of any data type, that is, may include only identification content such as the data type and the first identifier, and does not include any actual data. Such a case occurs because a size of the positioning assistance data is indeterminate but a transmission quantity of the first data packets in a unit time is determined. Therefore, when there is a relatively small amount of the positioning assistance data, no sufficient first data packets can be segmented for transmission, resulting in a case in which some first data packets do not carry the positioning assistance data. In the embodiments of this application, the null packet indication is added to the first data packet that does not include the actual positioning assistance data, so that after obtaining the null packet indication of this type of the first data packet, the UE skips parsing a data part of the first message of this type, thereby improving resource utilization.

In some embodiments, the first message further includes a retransmission indication. The retransmission indication is used to indicate that the first message is a message of data type retransmission. In this case, the method may further include: retransmitting, by the base station by using the first message that does not include the positioning assistance data, the first message of a preset data type. The first message may alternatively be a retransmission message. The retransmission is retransmission of some of a plurality of first messages obtained after the positioning assistance data is divided. A first message used for the retransmission may be the first message that is previously determined not to include the positioning assistance data. Through retransmission by using the first message of this type, the first message that does not include the positioning assistance data can be used, and resource utilization can be improved.

In some embodiments, the first message further includes version information of a standard used by the positioning assistance data. The positioning assistance data of a GNSS type may have a plurality of versions of standards. Therefore, in actual transmission of the positioning assistance data, the version information of the standard used by the positioning assistance data needs to be indicated in the first message, so that after receiving the positioning assistance data, the terminal can perform corresponding processing.

In some embodiments, the base station may broadcast at least one of an end data packet indication, the first identifier, the positioning method, and the version information of the standard used by the positioning assistance data, to the terminal.

In some embodiments, the positioning assistance data may include public assistance data and GNSS assistance data. The public assistance data is a part that can be shared for different data types. The GNSS assistance data corresponds to the data type of the positioning assistance data. Therefore, if the GNSS type is different, the GNSS assistance data is also different. Alternatively, the positioning assistance data may include the public assistance data and satellite-based augmentation system (satellite-based augmentation system, SBAS for short) assistance data. The SBAS assistance data also corresponds to the data type of the positioning assistance data, and the SBAS assistance data corresponding to different SBAS systems is different.

In some embodiments, a process of broadcasting, by the base station, the first data packet in the first message to the UE may be as follows. The base station first determines a visual field of the first message. After the first data packet is broadcast, the UE can directly read the visual field and does not need to learn of the visual field only by parsing the message after receiving the message, so that the UE may skip receiving data that the UE does not need; and the visual field includes a packet header of the first data packet, where the packet header includes the following manners: in a first manner, the packet header includes the first identifier and the data type; and in a second manner, the packet header includes the first identifier, a subsequent first identifier of the first identifier, and the data type. Using an example in which the first identifier is a packet sequence number of the first data packet, the packet header of the first manner includes only the packet sequence number of the current packet, and the UE may identify which data packet in the positioning assistance data the first data packet is. The packet header in the second manner includes the packet sequence number of the current first data packet and a subsequent packet sequence number, so that the UE may learn of packet sequence numbers of one or more subsequent first data packets of the first data packet.

In some embodiments, the first message further includes a second data packet. In this case, the process of broadcasting, by the base station, the first data packet in the first message to the UE may be: first determining, by the base station, the visual field of the first message, where the visual field includes content of the second data packet, the second data includes the first identifier and the data type, or the second data packet includes the first identifier, the subsequent first identifier of the first identifier, and the data type, and the second data packet is used to indicate the first data packet; and sending, by the base station in a broadcast manner, the second data packet and the first data packet in the first message. That is, content of the second data packet plus content of the first data packet is equivalent to content of the foregoing first data packet. Specifically, the second data packet is equivalent to the packet header of the first data packet. In such a division manner, the second data packet and the first data packet need to be two time-adjacent data packets. That is, a time difference between the two data packets may be several milliseconds. After parsing the second data packet, the UE immediately parses the first data packet, that is, content indicated in the second data packet. In such a manner, the UE only needs to parse the second data packet. The first data packet is parsed only after it is determined, based on a result of parsing the second data packet, that subsequent data is needed, thereby reducing processing resources of the UE and improving system efficiency.

In some embodiments, the second data packet may further carry scheduling information of a resource location of the first data packet, so that after parsing the second data packet, the UE may learn of a specific location that is of the first data packet indicated therein and that is in a time-frequency resource, and can directly search for the first data packet based on the scheduling information when the first data packet is required. Therefore, the first data packet does not need to be parsed again in a parsing manner such as by using a physical downlink control channel (physical downlink control channel, PDCCH for short).

In some embodiments, before sending the first message, the base station may further receive a first request message sent by the server. After receiving the first request message, the base station sends a first response message to the server based on the first request message.

In some embodiments, before sending the first message, the base station may further receive the first request message sent by the server, where the request message is used to obtain a rate or a data volume size of the positioning assistance data sent by the base station; and the base station notifies, by using the first response message, the server of a size of a volume of sent data and/or a transmission period. Specifically, configuration information of an SIB or system information (system information, SI for short) may be carried in the first response message, and the configuration information includes the size of a volume of sent data and/or the transmission period. That is, before sending the first message including the positioning assistance data to the base station, the server first obtains, from the base station, the data volume size and/or the transmission period when the base station broadcasts the positioning assistance data, thereby accordingly determining the rate or the data volume size of the positioning assistance data sent to the base station, so that implementability of the solutions of this application is improved.

According to a second aspect, an embodiment of this application further provides a data transmission method. The method may include: generating, by a server, a first message, where the first message carries a first data packet including positioning assistance data; and sending, by the server, the first message to a base station, to enable the base station to broadcast the first data packet in the first message to a terminal, and to enable the terminal to calculate positioning information of the terminal based on the positioning assistance data.

It can be learned that, the sending is performed in a broadcast manner, while the broadcast manner has a relatively strict requirement for a size of a data block, and an integral piece of positioning assistance data is greater than the size of the data block. Therefore, to perform the broadcasting, the positioning assistance data sent to the base station is sent by being divided into first data packets in a plurality of first messages, thereby making full use of a spectrum resource. In addition, a division manner can ensure that the positioning assistance data can be integrally sent to the terminal, thereby completing calibration of a location by the terminal.

In some embodiments, each first message carries a first identifier. The first identifier is mainly used to identify a location that is of a subset of the positioning assistance data in the first data packet in the first message and that is in the positioning assistance data. That is, when the positioning assistance data includes a plurality of first data packets, the first data packets obtained by division need to be sorted based on a sequence of the positioning assistance data, and the first identifier identifies positioning of each first data packet in the positioning assistance data. That is, the first identifier may be a sequence number of each first data packet when the positioning assistance data is divided into the plurality of first data packets.

In some embodiments, the first message further carries a data type of the positioning assistance data in the first message, and the data type is used to distinguish between different types of the positioning assistance data.

In some embodiments, the first message further carries a data type of the first message. The data type is a data type determined based on a GNSS type, different GNSSs correspond to different data types, and different GNSSs may include different data, thereby supporting data of diverse different GNSS systems.

In some embodiments, the data type is a data type determined based on the GNSS type and a positioning type, and the GNSS type includes different positioning types, so that a same GNSS type and different positioning types can correspond to different data types, classification of the data type is more refined, information that the data type can reflect is more abundant, no additional transmission resource is added, and transmission of first messages of different data types is easier.

In some embodiments, the data type is a data type determined based on the GNSS type, a transmission frequency band, and the positioning type. That is, different data types can correspond to different frequency bands, so that a same GNSS and a same positioning type and different frequency bands can correspond to different data types, classification of the data type is more refined, information that the data type can reflect is more abundant, no additional transmission resource is added, and transmission of first messages of different data types is easier.

In some embodiments, the data type may alternatively be a type determined based on different first parameters.

In some embodiments, the first message further includes a null packet indication, and the first message including the null packet indication does not include the positioning assistance data. The first message of this type may not include the positioning assistance data of any data type, that is, may include only identification content such as the data type and the first identifier, and does not include any actual data. Such a case occurs because a size of the positioning assistance data is indeterminate but a transmission quantity of the first data packets in a unit time is determined. Therefore, when there is a relatively small amount of the positioning assistance data, no sufficient first data packets can be segmented for transmission, resulting in a case in which some first data packets do not carry the positioning assistance data. In the embodiments of this application, the null packet indication is added to the first data packet that does not include the actual positioning assistance data, so that after obtaining the null packet indication of this type of the first data packet, the UE skips parsing a data part of the first message of this type, thereby improving resource utilization.

In some embodiments, the first message further includes a retransmission indication. The retransmission indication is used to indicate that the first message is a message of data type retransmission. In this case, the method may further include: retransmitting, by the base station by using the first message that does not include the positioning assistance data, the first message of a preset data type. The first message may alternatively be a retransmission message. The retransmission is retransmission of some of a plurality of first messages obtained after the positioning assistance data is divided. A first message used for the retransmission may be the first message that is previously determined not to the positioning assistance data. Through retransmission by using the first message of this type, the first message that does not include the positioning assistance data can be used, and resource utilization can be improved.

In some embodiments, the first message further includes version information of a standard used by the positioning assistance data. The positioning assistance data of a GNSS type may have a plurality of versions of standards. Therefore, in actual transmission of the positioning assistance data, the version information of the standard used by the positioning assistance data needs to be indicated in the first message, so that after receiving the positioning assistance data, the terminal can perform corresponding processing.

In some embodiments, the positioning assistance data may include public assistance data and GNSS assistance data. The public assistance data is a part that can be shared for different data types. The GNSS assistance data corresponds to the data type of the positioning assistance data. Therefore, if the GNSS type is different, the GNSS assistance data is also different. Alternatively, the positioning assistance data may include the public assistance data and SBAS assistance data. The SBAS assistance data also corresponds to the data type of the positioning assistance data, and the SBAS assistance data corresponding to different SBAS systems is different.

In some embodiments, before the sending, by the server, the first message to a base station, the method may further include first encrypting, by the server, the first message; and the sending, by the server, the first message to a base station corresponds to sending the encrypted first message to the base station. The base station actually does not decrypt the first message, but only broadcasts the encrypted first message to the terminal, and the terminal performs decryption to obtain the data therein.

In some embodiments, before sending the first message to the base station, the server first collects the positioning assistance data, and then further sends a first request message to the base station, to obtain a rate or a data volume size of the positioning assistance data sent by the base station; and after receiving a first response message sent by the base station, may send the first message based on configuration information of an SIB or SI carried in the first response message, where the configuration information of the SIB or SI includes a size of a volume of sent data and/or a transmission period, thereby accordingly determining the rate or the data volume size of the positioning assistance data sent to the base station, so that implementability of the solutions of this application is improved.

According to a third aspect, this application provides a base station. The base station includes at least one unit configured to perform the data transmission method according to the first aspect or any implementation of the first aspect.

According to a fourth aspect, this application provides a server. The server includes at least one unit configured to perform the data transmission method according to the first aspect or any implementation of the first aspect.

According to another aspect, this application provides a computer readable storage medium. The storage medium stores program code, and when the program code is run by a terminal, a computer is caused to perform the method according to the foregoing aspects. The storage medium includes but is not limited to a flash memory (flash memory), a hard disk drive (hard disk drive, HDD for short), or a solid-state drive (solid state drive, SSD for short).

According to another aspect, this application provides a computer program product including an instruction, and when the computer program product is run on a computer, the computer is caused to perform the method according to the foregoing aspects.

### BRIEF DESCRIPTION OF DRAWINGS

FIG. 1 is a schematic architectural diagram of an RTK positioning technology;
FIG. 2 is a schematic architectural diagram of a data transmission method according to an embodiment of this application;
FIG. 3 is a diagram of an embodiment of a data transmission method according to the embodiments of this application;
FIG. 4 is a schematic diagram of a first identifier in a data transmission method according to an embodiment of this application;
FIG. 5 is a schematic diagram of a data type classified in a manner of distinguishing a frequency in a GPS system;
FIG. 6 is a schematic diagram of a data type classified in a manner of distinguishing a frequency in a GLONASS system;
FIG. 7 is a schematic diagram of a data type classified in a manner of distinguishing a frequency in a BDS system;
FIG. 8 is a schematic diagram of a data type classified in a manner of distinguishing a frequency in a Galileo system;
FIG. 9 is a schematic diagram of a data type classified in a manner of distinguishing a frequency and a correction number in a QZSS system;
FIG. 10 is a schematic diagram of a data type classified in a manner of distinguishing a frequency and a correction number in a GPS system;
FIG. 11 is a schematic diagram of a data type classified in a manner of distinguishing a frequency and a correction number in a GLONASS system;
FIG. 12 is a schematic diagram of a data type classified in a manner of distinguishing a frequency and a correction number in a BDS system;
FIG. 13 is a schematic diagram of a data type classified in a manner of distinguishing a frequency and a correction number in a Galileo system;
FIG. 14 is a diagram of an embodiment of a data transmission method according to the embodiments of this application;
FIG. 15 is a diagram of an embodiment of a data transmission method according to the embodiments of this application;
FIG. 16 is a diagram of an embodiment of a data transmission method according to the embodiments of this application;
FIG. 17 is a schematic diagram of a base station according to an embodiment of this application;
FIG. 18 is a schematic diagram of a server according to an embodiment of this application;
FIG. 19 is a schematic diagram of a base station according to an embodiment of this application; and
FIG. 20 is a schematic diagram of a server according to an embodiment of this application.

### DESCRIPTION OF EMBODIMENTS

Embodiments of this application provide a data transmission method, a server, and a base station. Positioning assistance data is divided into a plurality of first messages and is broadcast to a terminal by the base station, thereby improving spectrum resource utilization efficiency.

To make a person skilled in the art understand the technical solutions in this application better, the following describes the embodiments of this application with reference to the accompanying drawings in the embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way is interchangeable in proper circumstances, so that the embodiments described herein can be implemented in other orders than the order illustrated or described herein. In addition, the terms "include", "have" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, product, or device.

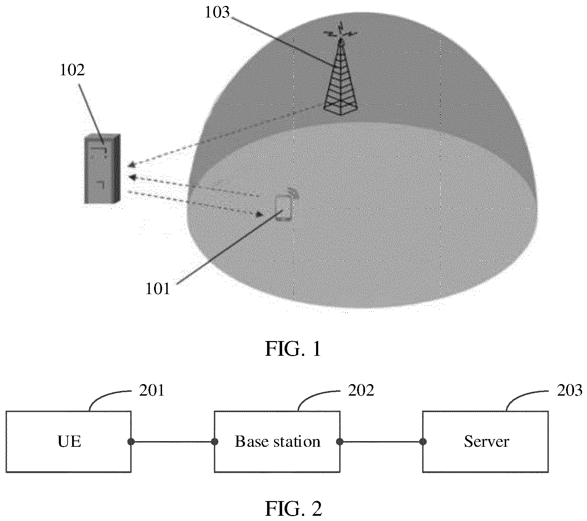

FIG. 1 is a schematic architectural diagram of an RTK positioning technology, the RTK positioning technology is used as an example, and a GPS system is used as an example of a specific positioning system. A positioning process may be specifically that: UE 101 first reports GPS location information of the UE 101 to an RTK server 102; then, the RTK server 102 obtains a third-party differential satellite correction number by using a third-party satellite ground based reference station 103, where specifically, the third-party satellite ground based reference station 103 compares actual location information of the third-party satellite ground based reference station 103 with GPS location information determined by using the GPS positioning technology, obtains the correction number, and then sends the correction number to the RTK server 102; and after obtaining the correction number and the GPS location information that is reported by the UE, the RTK server 102 calculates a correction number of the UE 101, and sends the correction number to the UE, so that the UE can calibrate the GPS location information based on the correction number and obtain more precise location information. In this sending manner, the correction number generated by the RTK server 102 is unicasted to the UE as application program data, and spectrum resource utilization is relatively low. An LTE positioning protocol (LTE positioning protocol, LPP for short) may be used to directly send the first message to the UE 101.

It should be noted that, the UE in the embodiments of this application may be a terminal device supporting communications types including machine-to-machine (machine to machine, M2M for short) communication, enhanced machine type communication (enhanced Machine Type Communication, eMTC for short), narrow band Internet of Things () (narrow band internet of things, NB-IoT for short), long term evolution (long term evolution, LTE for short), new radio (new radio, NR for short), or the like.

The base station may be an evolved NodeB (evolved node B, eNB for short), a base station (base station, BS for short), an IoT eNB, and a gNB (a name of a base station used in a 5G network).

The server may include an evolved serving mobile location center (evolved serving mobile location center, E-SMLC for short), a gateway mobile location center (Gateway Mobile Location Center, GMLC for short), an RTK server, or another server.

In the embodiments of this application, a cellular technology is introduced in the RTK technology, so that the assistance positioning data sent by the RTK server to the UE may be broadcast to the UE through the base station. Specifically, the base station may be added between the RTK server and the terminal in the foregoing architecture, thereby forming an architecture shown in FIG. 2. FIG. 2 is a schematic architectural diagram of a data transmission method according to an embodiment of this application. In the architecture, UE 201 interacts with a server 203 through a base station 202. Uplink data (for example, location information obtained by using a technology such as the GPS) of the UE 201 is sent to the server 203 through the base station 202. Downlink data (for example, a correction number calculated for the UE, used as positioning assistance data) of the server may be first sent to the base station 202, and then be broadcast to the UE 201 by the base station, to improve spectrum resource utilization.

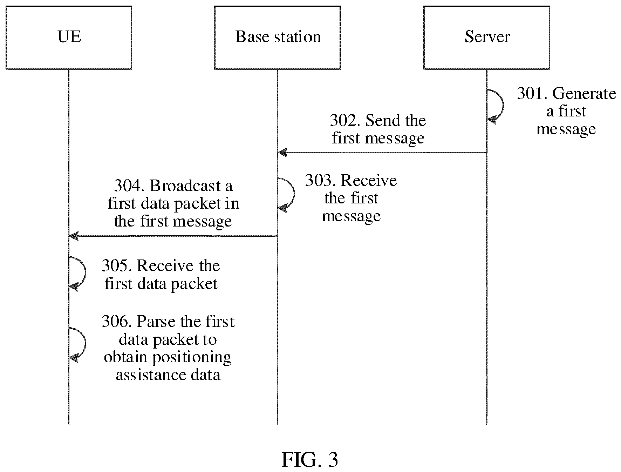

In the embodiments of this application, the data transmission method is described by using positioning assistance data transmission as an example. FIG. 3 is a diagram of an embodiment of the data transmission method according to the embodiments of this application. The method may include:

### Uplink direction:

The UE sends a positioning assistance data obtaining request to the base station.

When having a requirement for high-precision positioning, the UE sends the positioning assistance data obtaining request to the server through the base station. The positioning assistance data obtaining request is mainly used to obtain the positioning assistance data from the server, the server may be a positioning server or an E-SMLC, and the positioning server or the E-SMLC is mainly configured to obtain the positioning assistance data.

The base station sends the positioning assistance data obtaining request to the server.

After receiving the positioning assistance data obtaining request, the base station sends the request to the positioning server or the E-SMLC.

It should be noted that, apart from sending the positioning assistance data obtaining request through the base station, the UE may perform the sending in another manner, for example, connecting to the Internet and sending the request to the positioning server or the E-SMLC through the Internet.

### Downlink direction:

301. The server generates a first message.

The first message carries a first data packet including the positioning assistance data. The base station then broadcasts the first data packet in the first message to a terminal, so that after receiving the first message, the terminal can obtain the positioning assistance data by extraction, and calculate a location of the terminal based on the positioning assistance data. The positioning assistance data is actually information about a correction number based on location information of the UE or the base station. The first message may include the first data packet, or the first message may include the first data packet and a second data packet.

In the following description, description is provided by using an example in which the sent first message includes only the first data packet.

A subsequently used broadcasting manner may be a system information block (system information block, SIB for short) broadcasting manner. In the SIB broadcast, a data transmission rate of the positioning assistance data is approximately 2 kbps to 10 kbps, and a data volume per second is approximately 250 bytes to 2K bytes. Because the SIB broadcasting manner has a physical restriction, that is, a maximum transport block size (transport block size, TBS for short) of the SIB broadcast is 277 bytes (byte), if the positioning assistance data is greater than 277 bytes, the positioning assistance data cannot be directly broadcast, and the positioning assistance data needs to be sent by being segmented or divided into packets.

For example, the positioning assistance data is transmitted at a rate of 10 kbps, and the SIB can maximally transmit 217 bytes or 277 bytes. A common packet of the positioning assistance data within 1 second is 1K to 2K bytes, a minimum transmission period is selected, the transmission period is 80 ms, and at most 12 data packets are transmitted within 1 second. If each data packet is 217 bytes, 217^{∗}12=2604 bytes, and 217^{∗}10=2170 bytes. In this case, transmitting 10 to 12 data packets per second can satisfy 1 to 2K bytes. Therefore, if one SIB is used for transmission, after the transmission period is fixed, a quantity of data packets that can be transmitted is also fixed.

Therefore, the server may transmit a data packet of big positioning assistance data in a segmented manner based on the SIB transport block size supported or configured by the base station, or an upper limit of the SIB transport block. That is, the transmission is performed based on the size of the SIB transport block.

It should be noted that, using an example in which the first message includes the first data packet, for each first data packet obtained by division, a first identifier is used to identify the first data packet. The first identifier is mainly used to identify a packet sequence number of the first data packet after the positioning assistance data is divided into packets, or a location of the data packet in the positioning assistance data; to be specific, if one piece of positioning assistance data includes a plurality of first data packets, the first data packets obtained by division need to be sorted based on a sequence of the positioning assistance data, and the first identifier identifies a location that is of positioning assistance data included in each first data packet and that is in the positioning assistance data. That is, the first identifier may be the sequence number of each first data packet when the positioning assistance data is divided into the plurality of first data packets. At the same time, the first identifier, apart from serving as an identifier such as the sequence number of each first data packet or a sequence number of segmentation, may alternatively be a predefined ending identifier. The ending identifier represents that the first data packet is a last first data packet of the positioning assistance data corresponding to the first data packet.

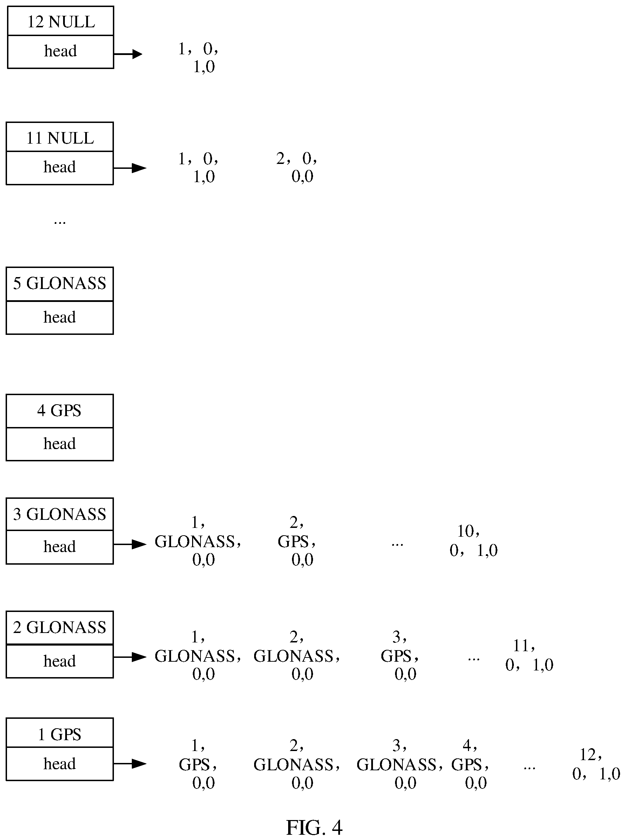

For example, FIG. 4 is a schematic diagram of the first identifier in the data transmission method according to the embodiments of this application. In a "packet header" of a 1^{st} first data packet, it is indicated that the current data packet is the GPS, and information about "packet headers" of subsequent 2^{nd} to 12^{th} first data packets, 11 first data packets in total, is also indicated; the "packet header" of the second first data packet indicates content of the "packet headers" of the 2^{nd} to the 12^{th} first data packets, 11 first data packets in total; the 3^{rd} first data packet includes content of the "packet headers" of the 3^{rd} to the 12^{th} first data packets, 10 first data packets in total; by analogy, the 11^{th} first data packet includes only content of the "packet headers" of the 11^{th} and the 12^{th} first data packets; and the 12^{th} first data packet, namely the last first data packet, includes only "packet header" information of the 12^{th} first data packet. Specifically, only subsequent data packets may be indicated, and content in a current data packet is not indicated. The packet header herein is only an alternative name of readable information or indication information that does not include a specific data portion. Specifically, indicated packet header information of each data packet herein is a data type of the data packet, and/or null packet indication information, and/or retransmission indication information, and/or whether the data packet is a last data packet, and/or reference sign information of segmentation.

Optionally, either data content or at least one data packet in each first message has the data type. The data type may be determined based on a GNSS type, and the data type may be used to distinguish between different GNSS types. For example, the positioning system may be the GPS used in regions such as the United States, a global navigation satellite system (global navigation satellite system, GLONASS for short) used in regions such as Russia, a Galileo satellite navigation system (Galileo satellite navigation system, Galileo for short) used in regions such as the Europe, or a BeiDou navigation satellite system (BeiDou navigation satellite system, BDS for short) used in regions such as China; and certainly, may alternatively be a relevant augmentation system, such as a wide area augmentation system (wide area augmentation system, WAAS for short) used in regions such as the United States, an European geostationary navigation overlay service (European geostationary navigation overlay service, EGNOS for short) used in regions such as the Europe, and a multi-functional satellite augmentation system (Multi-Functional Satellite Augmentation System, MSAS for short) and a quasi-zenith satellite system (quasi-zenith satellite system, QZSS for short) used in regions such as Japan. All these different positioning and the relevant augmentation systems can be set to different data types, so that after obtaining the data type, the UE can learn of the specific type of the positioning and relevant augmentation systems, thereby quickly identifying data of a needed data type in the broadcast first data packet. That is, the GNSS type includes the GPS, the GLONASS, the BDS, the QZSS, the Galileo, the SBAS, and the like.

Optionally, the data type may be determined based on different positioning methods, or the data type may be determined based on the GNSS type and the positioning method. For the GNSS, there may be different positioning methods, that is, positioning types corresponding to the GNSS types. Different positioning types may have different correction number types. These positioning methods include location differential, pseudorange differential, phase smoothed pseudorange differential or other pseudorange differential, real time kinematic, a local area differential GPS, a wide area differential GPS, virtual reference station (Virtual Reference Station, VRS for short) network RTK, media access control (media access control, MAC for short) network RTK, Flchenkorrekturparameter (Flchenkorrekturparameter, FKP for short) network RTK, real time DGPS (real time DGPS, RTD for short), a state space representation (state space representation, SSR for short) method, and other positioning methods, where the DGPS stands for a differential global positioning system (differential global positioning system, DGPS for short). All these positioning methods are implemented by performing UE correction number calculation by using a correction number of a reference station close to the UE. Because the data type needs to be determined based on both the GNSS type and the positioning type, a same GNSS type combined with different positioning methods can have different data types.

Optionally, the data type is a data type determined based on the GNSS type, a transmission frequency band, and the positioning type. That is, different data types may further correspond to different frequency bands (or referred to as frequencies). Because different GNSS types may correspond to different frequency bands, different data types may be sent on different frequency bands. In the embodiments of this application, the frequency band may include L1, L2, L5, B1, B2, B3, L6, El, E5a, E5b, and the like. The L1 frequency band, the L2 frequency band, and the L5 frequency band can be used in the GPS system; the L1 frequency band and the L2 frequency band can be used in the GLONASS system; the B1 frequency band, the B2 frequency band, and the B3 frequency band can be used in the BDS system; the El frequency band, the E5a frequency band, and the E5b frequency band can be used in the Galileo system; and the L1 frequency band, the L5 frequency band, and the L6 frequency band can be used in the QZSS system. GNSSs corresponding to different frequency bands may also support different positioning methods. The data type may be determined based on the GNSS, the frequency band, and the positioning method.

Different GNSSs, different positioning methods, different frequency bands, and different parameters all may be different data types, or may be combined to form a positioning type.

For example, the data type is a data type determined based on the GNSS and the positioning method. The data type may be determined based on a GNSS and a positioning method, or different positioning methods and different data types may be further distinguished under a data type of the GNSS.

It can be learned that, in this way, a same GNSS and a same positioning type and different frequency bands can correspond to different data types, so that classification of the data type is more refined, information that the data type can reflect is more abundant, no additional transmission resource is added, and transmission of first messages of different data types is easier.

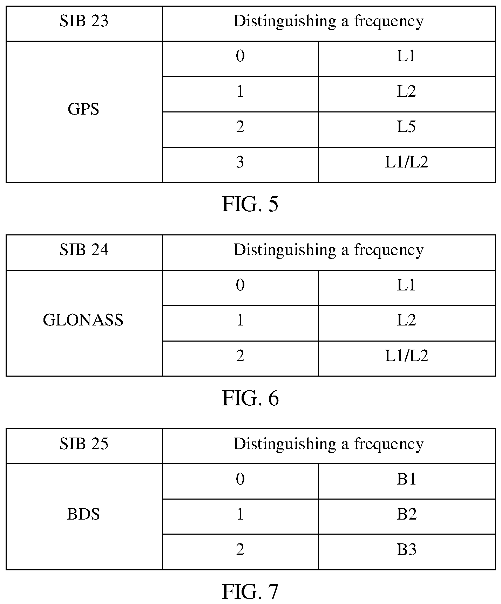

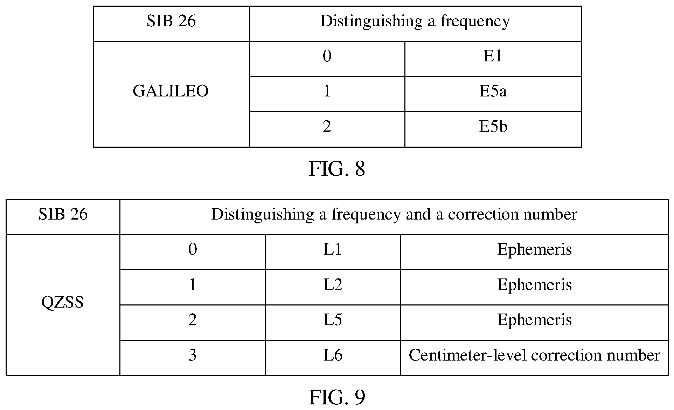

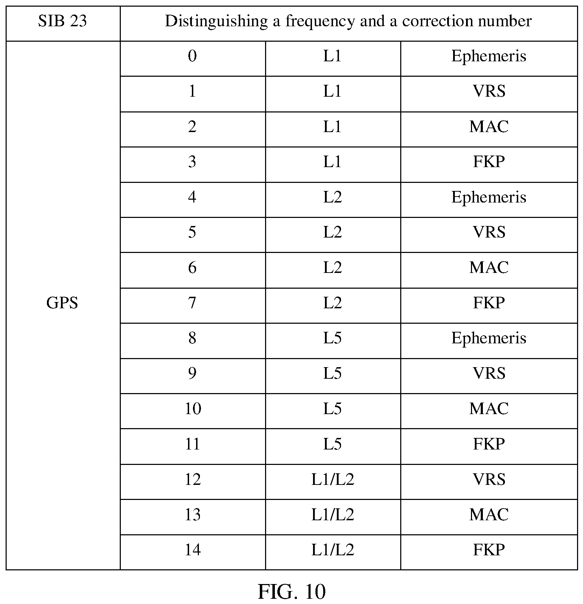

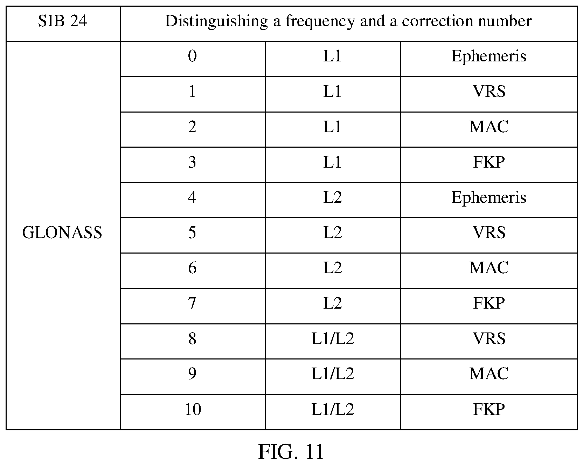

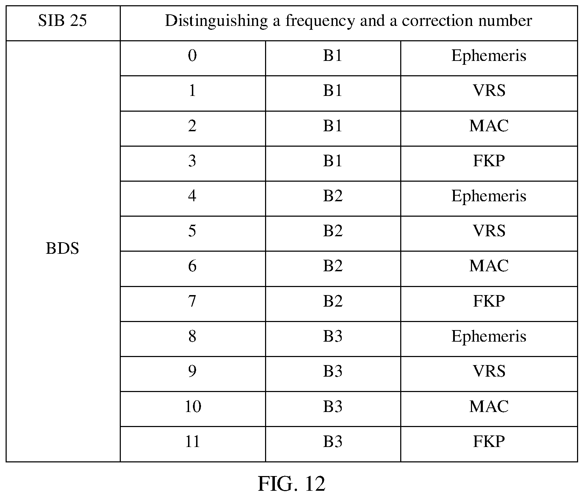

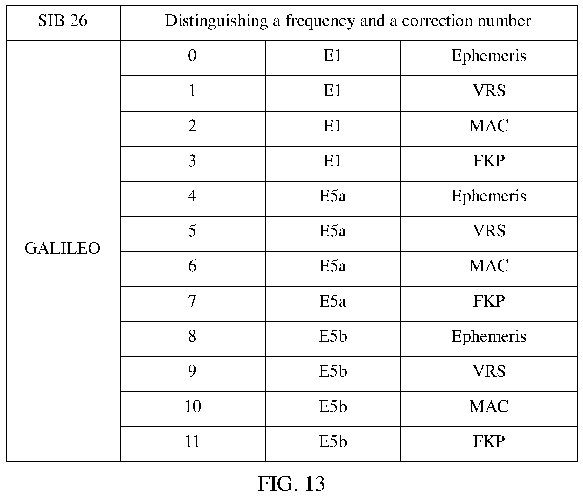

For example, refer to FIG. 5 to FIG. 13. FIG. 5 is a schematic diagram of a data type classified in a manner of distinguishing a frequency in the GPS system; FIG. 6 is a schematic diagram of a data type classified in the manner of distinguishing a frequency in the GLONASS system; FIG. 7 is a schematic diagram of a data type classified in the manner of distinguishing a frequency in the BDS system; FIG. 8 is a schematic diagram of a data type classified in the manner of distinguishing a frequency in the Galileo system; FIG. 9 is a schematic diagram of a data type classified in a manner of distinguishing a frequency and a correction number in the QZSS system; FIG. 10 is a schematic diagram of a data type classified in the manner of distinguishing the frequency and a correction number in the GPS system; FIG. 11 is a schematic diagram of a data type classified in the manner of distinguishing the frequency and a correction number in the GLONASS system; FIG. 12 is a schematic diagram of a data type classified in the manner of distinguishing the frequency and a correction number in the BDS system; and FIG. 13 is a schematic diagram of a data type classified in the manner of distinguishing the frequency and a correction number in the Galileo system. An ephemeris in GPS measurement is a table of a precise location or a trajectory that is of a moving celestial body and that changes with time, and the ephemeris is a function of time. An SIB23, an SIB24, an SIB25, and an SIB26 are types of the SIB. The SIB may include a plurality of types. The SIB types in FIG. 5 to FIG. 13 are not limited to the SIB types in the figures and may be changed.

It should be noted that, in the embodiments of this application, the positioning assistance data may be sent by performing unified segmentation or by being divided into a plurality of data packets. In this case, encrypted information version information of a standard used by the positioning assistance data may be further carried. Details are shown in the following Table 1:

**Table 1**

| Group name |
|---|
| Encrypted information |
| Segment list of positioning assistance data |
| Version information of a standard |

The encrypted information is key information in which data is encrypted. The segment list of the positioning assistance data is similar to identifying the location of the data packet by using the first identifier, as shown in FIG. 4, and the list may list segments obtained by dividing the positioning assistance data or a data packet list. The version information of the standard is the version information of the standard used by the positioning assistance data. The version information may include a version number and/or a version type. The standard used by the positioning assistance data can be uniquely determined based on the version number and/or the version type.

Apart from the foregoing manner in which all the positioning assistance data is sent by performing unified segmentation or by being divided into the plurality of data packets, a manner in which the data is sent in a distinguishing manner may be alternatively used. For example, some of the positioning assistance data is used as data, applicable to all the GNSSs, namely a public data part, and another part may be data classified based on different GNSSs, namely, a GNSS positioning assistance data part. Further, the data may be further classified under each GNSS. For example, if the GNSS type is the SBAS, the data may be further classified. Because the SBAS further includes the WAAS of the United States, the system for differential corrections and monitoring (system for differential corrections and monitoring, SDCM for short) of Russia, the EGNOS of the Europe, the MSAS of Japan, and the GPS aided geo augmented navigation (GPS aided geo augmented navigation, GAGAN for short) of India, the data is classified based on different SBASs. For example, some data belongs to the WAAS. In this case, the first message may carry a segment list of the public data, the version information, a data packet of public positioning assistance data, a data list of the GNSS and/or the SBAS, a data type of the GNSS and/or the SBAS, a positioning assistance data segment list of the GNSS and/or the SBAS, the version information, and the positioning assistance data of the GNSS and/or the SBAS. In addition, when sending the data to the base station, the positioning server may further send the version information and the key information to the base station, where there may be specifically one piece of the key information, or there may be different key information sent for different data types. A data sending format may be specifically shown in the following Table 2:

**Table 2**

| Group name |
|---|
| >Segment list of public data |
| >> Version information of a standard |
| >>Data packet of public positioning assistance data |
| >GNSS |
| >>GNSS type |
| >>SBAS data type (optional) |
| >>Segment list of positioning assistance data of the GNSS or the SBAS |
| >>>Version information of the standard |
| >>>Positioning assistance data of the GNSS or the SBAS |

The segment list of the public data or the positioning assistance data segment list of the GNSS and/or a specific type of a specific SBAS is similar to identifying the location of the data packet by using the first identifier as shown in FIG. 4. The segment list of the public data or the segment list of the positioning assistance data of the GNSS and/or the specific type of the specific SBAS is a list of segments or data packets obtained after the public positioning assistance data or the positioning assistance data of the GNSS and/or the specific type of the specific SBAS is divided. The version information of the standard is the version information of the standard used by the positioning assistance data. The version information may include the version number and/or the version type. The standard used by the positioning assistance data of the GNSS or the SBAS or used by the public positioning assistance data can be uniquely determined based on the version number and/or the version type. In the foregoing list, each segment indicates the version information. Specifically, a segment list or a data type may indicate one piece of the version information.

The SBAS can broadcast diverse correction information such as an ephemeris error, a satellite error, and an ionosphere delay to a user through a satellite navigation augmentation signal transponder carried on a geosynchronous equatorial orbit (GEO) satellite, and implement improvements to positioning precision of an original satellite navigation system, thereby becoming a means that all major countries of aerospace are developing. Currently, a plurality of SBAS systems have been established globally, such as the WAAS of the United States, the system for differential corrections and monitoring (system for differential corrections and monitoring, SDCM for short) of Russia, the EGNOS of the Europe, the MSAS of Japan, and the GPS aided geo augmented navigation (GPS aided geo augmented navigation, GAGAN for short) of India. Operating principles of these SBAS systems are basically the same. First, massive differential stations (locations are known) that widely spread monitor a navigation satellite, obtain original positioning data (a pseudorange, a phase broadcast by the satellite, or the like), and send the original positioning data to a central processing facility (a main control station); and the central processing facility obtains diverse positioning correction information of each satellite by calculation, sends the positioning correction information to the GEO satellite through an uplink injection station, and finally the GEO satellite broadcasts the correction information to users, thereby improving positioning precision.

Certainly, apart from the foregoing unified manner or distinguishing between public and non-public positioning assistance data, classification may also be performed based on different data. Specifically, classification may be performed based on one or several types or a combination of several types of data listed in the following Table 3:

**Table 3**

| | |
|---|---|
| GNSS-Reference time | Public positioning assistance data |
| GNSS-Reference location | |
| GNSS-Ionosphere model | |
| GNSS-Earth orientation parameter | |
| RTK public assistance data 1 | |
| RTK public assistance data 2 | |
| ... | |
| GNSS-Time model | Positioning assistance data related to the GNSS (the positioning assistance data is associated with different GNSS types) |
| GNSS-Differential correction number | |
| GNSS-navigation model | |
| GNSS-Real-time integrity (real-time integrity) | |
| GNSS-Data bit assistance (data bit assistance) | |
| GNSS-Obtain assistance data | |
| GNSS-Almanac | |
| GNSS-UTC model | |
| GNSS-Auxiliary information (auxiliary information) | |
| BDS-Correction number | |
| BDS-Coordinate model parameter-rl2 | |
| RTK common assistance data 1 | |
| RTK common assistance data 2 | |

Performing classification based on one type means selecting one type therein as a basis for classification; performing classification based on several types means selecting at least two types in the foregoing list as a basis for at least two types of classification; and performing classification based on a combination of several types means that at least two types of the foregoing data are required to be a classification basis for one type of classification.

Specifically, in the foregoing data type classification, the reference time may specifically include information such as time of week, TOW, and indeterminacy of the reference time, and may include reference time of different GNSSs herein. The GNSS reference location is reference location information, the GNSS ionosphere model is a simulated effect of an effect of a signal weakened by the ionosphere, and the RTK public assistance data may include information such as an antenna descriptor.

It should be noted that, the public positioning assistance data is mainly sent together in scheduling and transmission, and specific content may distinguish between different GNSSs. The public positioning assistance data is merely sent together and is used by a user in a distinguishing manner when the user receives the public positioning assistance data. For example, the GNSS time may specifically include the reference time of different GNSSs. If UE only supports the GPS, the UE may only use GPS reference time. However, from a perspective of a terminal, no matter which type of a satellite system is supported, this part of message can be received. The positioning assistance data related to the GNSS may be sent in a distinguishing manner based on different GNSSs during scheduling and transmission by a base station, and the UE may selectively receive data that the UE supports.

For positioning assistance data related to the GNSS, a specific type may be understood as a type determined based on two types together, such as the GNSS time model, namely, a UTC model of a GNSS, such as a GPS UTC model or a BDS UTC model. In the positioning assistance data related to the GNSS, a data type that uses GNSS- as a prefix represents a parameter that can distinguish different GNSSs. Distinguishing between GNSSs may specifically be implemented by scheduling, for example, through an SIB1. Specifically, the UTC model is a group of parameters of GNSS time that are related to UTC. The navigation model includes satellite information and ephemeris information of different GNSSs, a clock correction number, and the like. The real-time integrity is a real-time state of the satellite navigation system. The data bit assistance is used for a specific satellite signal during transition. The GNSS-auxiliary information is auxiliary information of different GNSSs. The differential correction number includes correction number information of differential satellite systems. The RTK common assistance data is the assistance data of different GNSSs. When the positioning server sends data of this type to the base station, a data type of a GNSS needs to be specifically indicated.

Specifically, the positioning server may indicate the following to the base station. The following fields are only examples, and it is not limited to including all the fields. One type or several types and a combination may be included, and may additionally indicate different positioning methods. Details are shown in Table 4:

**Table 4**

| Group name |
|---|
| >Segment list of public data |
| >>Version information of a standard |
| >>Data list of public positioning assistance data |
| GNSS-Reference time |
| GNSS-Reference location |
| GNSS-Ionosphere model |
| GNSS-Earth orientation parameter |
| RTK public assistance data 1 |
| RTK public assistance data 2 |
| >GNSS |
| >>GNSS type |
| >>SBAS type (optional) |
| >>Data type list |
| >>>Version information of a standard |
| GNSS-Time model |
| GNSS-Differential correction number |
| GNSS-navigation model |
| GNSS-Real-time integrity (real-time integrity) |
| GNSS-Data bit assistance (data bit assistance) |
| GNSS-Obtain assistance data |
| GNSS-Almanac |
| GNSS-UTC model |
| GNSS-Auxiliary information (auxiliary information) |
| BDS-Correction number |
| BDS-Coordinate model parameter-rl2 |
| RTK common assistance data 1 |
| RTK common assistance data 2 |

To be specific, when the positioning server sends the data to the base station, different data types need to be indicated. The specific type may be indicated in a separate or unified manner. This is not limited herein.

It should be noted that, in the embodiments of this application, a first parameter may include one type or several types and a combination in the foregoing Table 4. Certainly, the first parameters in Table 4 are merely examples, and do not represent that only these parameters can be used as the first parameter. There may be more first parameters of the embodiments of this application, and specifically, this is different depending on an actual application scenario. This is not limited herein.

It should be noted that, in broadcast of subsequent step 304, one SIB may be used to broadcast all the foregoing data of unified types; for public and non-public classification manners, the public data may be broadcast through one or several SIBs, and data broadcast by remaining SIBs is bound to the GNSS. Specifically, a binding relationship may be a default binding relationship, or may be a manner in which the SIB corresponds to the GNSS and that is implemented in scheduling. For the third type, different SIBs are used to perform sending based on different data types or a changing period of different data types. That is, each data type is broadcast through one SIB, or several types are broadcast by combining to form one SIB.

That is, when the positioning server sends the data to the base station, a specific data type needs to be indicated. For example, distinguishing under a parameter is performed to indicate different GNSS types and/or SBAS types, or a parameter type under a GNSS type and/or an SBAS type. The parameter herein may be the time model, the UTC model, the correction number, and the like in the foregoing table. In addition, different positioning methods, different version information, key information, and the like may be indicated.

In this specification, the data type that needs to be indicated includes at least one type or a combined indication of several types in different GNSS types and/or SBAS types, different positioning methods, different parameters, and the like.

302. The server sends the first message to the base station.

After generating the first message, the server sends the first message to the base station. The server may send the first message by using an LTE positioning protocol A (LTE positioning protocol A, LPPA for short).

303: The base station receives the first message.

The base station receives the first message sent by the server.

304. The base station broadcasts the first data packet in the first message.

A manner of the broadcasting may be SIB broadcast. For the SIB broadcast, there are a plurality of SIB types. Scheduling information of the SIB may be carried by a master information block (master information block, MIB for short). The MIB is mainly used to transmit, through a physical broadcast channel (physical broadcast channel, PBCH for short), basic information required by the system. For example, (1) SIB1: including system information of a non-access stratum (non-access stratum, NAS for short); (2) SIB3: including a parameter used for cell selection and reselection; (3) SIB5: including a parameter used for cell common physical channel configuration; (4) SIB7: including information such as uplink interference and a dynamic persistent level; (5) SIB 11: including measurement control information; (6) SIB 18: an identifier of a public land mobile network (Public Land Mobile Network, PLMN for short) close to a cell in an idle mode and a connected mode; and (7) SIB 19: including a frequency, a priority, and the like between different system cells.

Optionally, the base station broadcasts the received plurality of first data packets, each broadcast data packet or a broadcast message further includes a null packet indication, and the first data packet including the null packet indication does not include any positioning assistance data. In this case, the broadcast data may not include the positioning assistance data of any data type, that is, may include only identification content such as the data type and the first identifier, and does not include any actual assistance positioning data. Such a case occurs because a size of the positioning assistance data is indeterminate but a transmission quantity of the first messages in a unit time is determined. Therefore, when there is a relatively small amount of the positioning assistance data, no sufficient first messages can be segmented for transmission, resulting in a case in which some first messages do not carry the positioning assistance data. In the embodiments of this application, the null packet indication is added to the first message that does not include the actual positioning assistance data, so that after obtaining the null packet indication of the first message of this type, the UE skips parsing a data part of the first message of this type, thereby improving resource utilization.

Optionally, the null packet indication may be performed inside each packet. That is, a packet sequence number at a null packet location corresponds to the null packet indication. In this way, when receiving the indication information, a terminal device skips receiving the data packet at the null packet location.

Optionally, the broadcast data packet or the broadcast message further includes a retransmission indication. The retransmission indication is used to indicate that the first data packet is a data packet of data type retransmission. In this case, the base station may retransmit a preset data type by using a first data packet that does not include the positioning assistance data (namely, a null packet). That is, the first message may alternatively be a retransmission message. The retransmission is for a case in which a plurality of first messages are obtained after the positioning assistance data is divided. For example, in the description of step 301, actually, 10 or 12 data packets are fixedly transmitted in Is, but only 8 first data packets are obtained after the positioning assistance data is divided, and there may be 2 or 4 null packets; and data of a data type in the 8 data packets is retransmitted by using one of the 2 or 4 null packets. Through retransmission by using the first data packet of this type, the null packet can be used, and resource utilization can be improved.

Optionally, a process of broadcasting, by the base station, the first message to the UE may be as follows. The base station first determines a visual field of the first message. After the broadcast, the UE can directly read the visual field and does not need to learn of the visual field only by parsing the message after receiving the message, so that the UE may skip receiving data that the UE does not need; and the visual field includes a packet header of the first data packet, where the packet header includes the following manners: in a first manner, the packet header includes the first identifier and the data type; and in a second manner, the packet header includes the first identifier, a subsequent first identifier of the first identifier, and the data type. Using an example in which the first identifier is a packet sequence number of the first data packet, the packet header of the first manner includes only the packet sequence number of the current packet, and the UE may identify which data packet in the positioning assistance data the first data packet is. The packet header in the second manner includes the packet sequence number of the current first data packet and a subsequent packet sequence number, so that the UE may learn of packet sequence numbers and content of one or more subsequent first data packets of the first data packet.

It should be noted that, when broadcasting the first data packet, the base station may also broadcast at least one of an end data packet indication, the first identifier, the positioning method, and the version information of the standard used by the positioning assistance data, to the terminal. For the first data packet of a data type, the end data packet indication is used to indicate that the current data type has no data packet, that is, all data packets of the current data type have been sent.

It should be noted that, in the embodiments of this application, the first message, apart from including the first message, may further include a second data packet. In this case, step 304 may be:
first determining, by the base station, the visual field of the first message, where
the visual field includes content of the second data packet, the second data packet includes the first identifier and the data type, or the second data packet includes the first identifier, the subsequent first identifier of the first identifier, and the data type; a third data packet includes the positioning assistance data; and the second data packet is used to indicate the third data packet; and
then sending, by the base station in a broadcast manner, the second data packet and the first data packet in the first message.

It can be learned that, content of the second data packet plus content of the first data packet is equivalent to content of the foregoing first data packet. Specifically, the second data packet part is equivalent to the packet header of the first data packet. In such a division manner, the second data packet and the first data packet need to be two time-adjacent data packets. For example, a time difference between the two data packets may be several milliseconds, instead of a difference greater than 80 milliseconds, to ensure that the two data packets are consecutively transmitted data packets in time. In an actual application scenario, a transmission period may be defined. If the UE, after parsing the second data packet, finds that the second data packet is the data that the UE needs, the UE may parse the adjacent first data packet and obtain the content indicated in the second data packet. In such a manner, in an identification stage, the UE only needs to parse the second data packet and does not need to parse the first data packet. The first data packet is parsed only after it is determined, based on a result of parsing the second data packet, that subsequent data is needed. Therefore, the UE may receive data that the UE supports and needs, and processing resources of the UE are saved, thereby on one hand reducing power consumption of the UE, and on the other hand, further improving system efficiency.

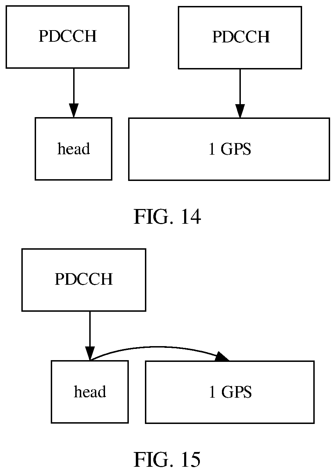

For example, FIG. 14 is a diagram of an embodiment of the data transmission method according to the embodiments of this application. For a first group of data packets, a 1^{st} data packet is the second data packet, including content of the packet header, and a 2^{nd} data packet is content of assistance positioning data of the GPS. When receiving the second data packet and the first data packet through a PDCCH, the UE first obtains the content in the second data packet, namely, the content in the packet header, by parsing the PDCCH; determines, based on the first identifier and data in the packet header, whether the content is data that the UE needs; and if the content is the data that the UE needs, parses the PDCCH again to obtain content of subsequent assistance positioning data of the GPS.

Optionally, the second data packet may further carry scheduling information of a resource location of the first data packet, so that after parsing the second data packet, the UE may learn of a specific location that is of the third data packet indicated therein and that is in a time-frequency resource, and can directly search for the first data packet based on the scheduling information when the first data packet is required. Therefore, on one hand, a process of parsing the PDCCH again is not needed, and on the other hand, the high requirement of the second data packet and the first data packet for a transmission time difference is not needed, that is, there may be several data packets between the second data packet and the first data packet.

For example, FIG. 15 is a diagram of an embodiment of the data transmission method according to the embodiments of this application. For a first group of data packets, a 1^{st} data packet is the second data packet, including content of the packet header, and a 2^{nd} data packet is content of assistance positioning data of the GPS. When receiving the second data packet and the first data packet through a PDCCH, the UE first obtains the content in the second data packet, namely, the content in the packet header, by parsing the PDCCH; determines, based on the first identifier and data in the packet header, whether the content is data that the UE needs; and if the content is the data that the UE needs, finds the first data packet based on the scheduling information of a resource location of the third data packet in the packet header, and obtains content therein.

It should be noted that, when broadcasting the first data packet and the second data packet, the base station may also broadcast at least one of the end data packet indication, the first identifier, the positioning method, and the version information of the standard used by the positioning assistance data, to the terminal.

305. The UE receives the first message.

Because the UE may learn, by using the visual field, whether the broadcast data packet is data that the UE needs and supports, the UE can selectively receive the broadcast data packet or choose whether to perform decryption, thereby reducing power consumption of the UE. When the UE receives the data packet and finds, based on the visual field, that the sent content is not supported, the UE may discard the data packet.

306. The UE parses the first message to obtain the positioning assistance data.

After receiving the first message, the UE may obtain data of a required type by using the manner shown in FIG. 4, FIG. 14, or FIG. 15, until content in the obtained data packet can form the completed positioning assistance data.

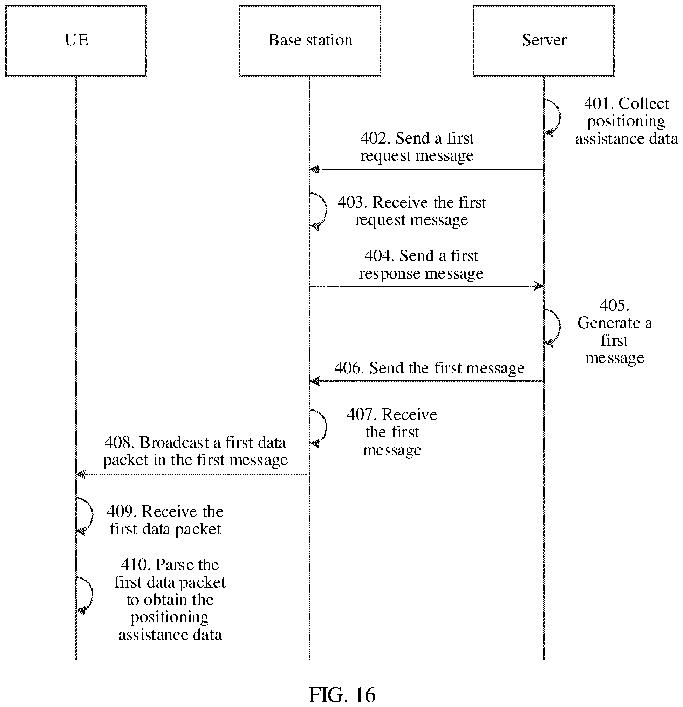

It should be noted that, apart from the foregoing implementations, before step 301, in the embodiments of this application, a step of obtaining a rate or data volume size of the positioning assistance data broadcast by the base station may be further added. Specifically, FIG. 16 is a diagram of an embodiment of the data transmission method according to the embodiments of this application. Step 405 to step 410 in the method are similar to step 301 to step 306 shown in FIG. 3. Details are not described herein again. In addition, the method further includes the following steps.

401. The server collects the positioning assistance data.

The positioning assistance data is data used for the terminal to perform positioning measurement or calculation.

402. The server sends a first request message to the base station.

The first request message is used for requesting the base station to send the positioning assistance data and perform broadcast configuration. The request message may carry the data rate or the data volume size of the positioning assistance data, and specifically, may include different data rates or data volume sizes of different data types. The message may include at least one data type and the rate. The base station may perform corresponding broadcast configuration based on received data rate or size information. For example, correction numbers of different GNSSs have different rates or data volumes, and the positioning server may notify the base station. For example, a rate of a GPS correction number is 200 bps, and a rate of a GLONASS correction number is 300 bps, or UTC models of different GNSSs, or the like. Certainly, the data rates or data volumes may also be data rates or data volumes of different GNSSs. The data type may be the type or a combination of the types described in this specification, but the data type is not limited.

Alternatively, the first request information requests the broadcast configuration of the base station. The broadcast configuration may specifically include a size of a data volume that can be broadcast and the transmission period. Therefore, after obtaining the information from the base station, the server needs to accordingly determine the rate or the data volume size of the positioning assistance data sent to the base station. That is, the first request message may alternatively not include the data rate or the data volume size.

A name of the message may be an RTK information request.

403. The base station sends a first response message based on the first request message.

The first response message carries information such as the data volume size and/or the transmission period of the SIB or the SI sent by the base station. The transmission period means, as described above, transmitting a data packet once at intervals of fixed duration, for example, 80 ms. The data volume size means a maximum data volume that each data packet can carry. The information such as the size of a volume of sent data and/or the transmission period is carried in configuration information of the SIB or the SI. The data volume size and/or the transmission period of the SIB or the SI sent by the base station may be related to different data types.

In addition, whether there is the first request message before the first response message is not limited.

Specifically, the size and/or the period of the transmitted data volume of the SIB or the SIB sent by the base station to the positioning server may be that the base station performs the sending based on rates or data volumes of different data types in a distinguishing manner. That is, data packet sizes and/or transmission periods that different data types are allowed to send are different. If different data types are associated with different system messages, the base station may send a data packet size and/or a transmission period of a corresponding SIB. For example, a GPS data volume sends by the base station to the positioning server is 100 bytes, and a transmission period is 160 ms; and a sent BDS data volume is 50 bytes, and a transmission period is 320 ms. In this case, the positioning server correspondingly performs data segmentation or divides the data into packets. A definition of the data type is described in the foregoing embodiments, but the data type is not limited to the types. Herein, a quantity that the base station sends to the positioning server is an example of an upper limit, and a specific quantity of bytes is not limited. To be specific, when the positioning server performs segmentation, the data volume size is not allowed to exceed the data volume.

Configuration of each group is shown in the following Table 5:

**Table 5**

| IE/Group Name | Presence | Range | IE Type and Reference | Semantics Description |
|---|---|---|---|---|
| Transport block size | M | | ENUMERATE D (B150, B200, B220, B240, ...) | A maximum TBS transmitted by an SIB used for RTK GNSS positioning. B150 corresponds to 150 bytes, and the like. |
| Transmission period | M | | ENUMERATE D (rf8, rfl6, rf32, rf64, rf128, rf256, rf512) | A period of a si-packet in a radio frame. rf8 represents 8 radio frames, rl6 represents 16 radio frames, and the like |

Optionally, the base station may notify the server of a quantity of times of repeatedly sending the packet.

404. The server sends the first message to the base station based on the configuration information of the SIB or SI in the first response message.

After obtaining the configuration information of the SIB or SI, the server may learn of the size of the data volume sent by the base station and/or the transmission period, thereby accordingly segmenting the positioning assistance data or dividing the positioning assistance data into a plurality of data packets for sending. Certainly, the positioning assistance data may be segmented in a manner the same as described above, or the public and non-public parts may be distinguished, or the sending may be performed in a classified manner based on one or several types or a combination of several types shown in Table 3.

It should be noted that, after finishing data packets of a data type, the server may send, to the base station, an end data packet indication, used to indicate the data type and indicate that the current data type has no data packet, that is, all data packets of the current data type have been sent. The end data packet indication may be broadcast to the terminal when the base station broadcasts the first data packet or the first data packet and the second data packet, so that after receiving the end data packet indication, the terminal does not receive the data packet of the data type any more.

The first message may be sent to the base station by the server in any manner in the foregoing embodiments of this specification, but the manner is not limited to the manners.

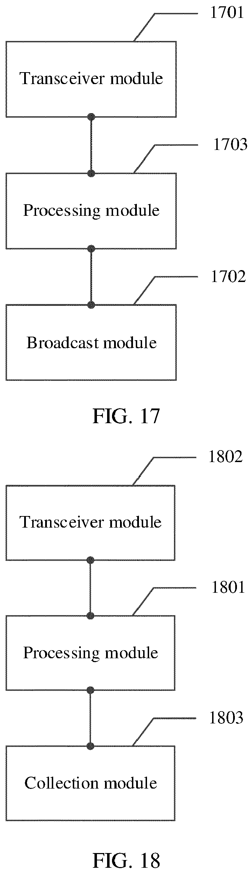

The data transmission method according to the embodiments of this application is described above. The following describes a base station according to the embodiments of this application. FIG. 17 is a schematic diagram of the base station according to the embodiments of this application. The base station may include:
a transceiver module 1701, configured to receive a first message sent by a server, where the first message carries a first data packet including positioning assistance data; and
a broadcast module 1702, configured to broadcast the first data packet in the first message to a terminal, to enable the terminal to calculate positioning information of the terminal based on the positioning assistance data.

Optionally, the first message carries a first identifier, and the first identifier is used to identify the first data packet in the first message.

Optionally, the first message further carries a data type of the positioning assistance data in the first message, and the data type is used to distinguish between different types of the positioning assistance data.

Optionally, the data type is a data type determined based on a type of a global navigation satellite system GNSS; or
the data type is a data type determined based on the GNSS type and at least one of a transmission frequency band and a positioning method; or
the data type is a type determined based on different first parameters.

Optionally, the first message further includes a null packet indication, and the first message including the null packet indication does not include the positioning assistance data.

Optionally, the first message further includes a retransmission indication, the retransmission indication is used to indicate that the first message is a message of data type retransmission, and the broadcast module is further configured to:
retransmit, by using the first message that does not include the positioning assistance data, the first message of a preset data type.

Optionally, the first message further includes version information of a standard used by the positioning assistance data.

Optionally, the broadcast module is further configured to:
broadcast at least one of the first identifier, the positioning method, and the version information of the standard used by the positioning assistance data, to the terminal.

Optionally, the positioning assistance data includes public assistance data and GNSS assistance data, and the GNSS assistance data corresponds to the data type of the positioning assistance data; or
the positioning assistance data includes public assistance data and satellite-based augmentation system SBAS assistance data in the GNSS assistance data, and the SBAS assistance data in the GNSS assistance data corresponds to the data type of the positioning assistance data.

Optionally, the base station further includes a processing module 1703, configured to determine a visual field of the first message, where the visual field includes a packet header of the first data packet in the first message, the packet header includes the first identifier and the data type, or the packet header includes the first identifier, a subsequent first identifier of the first identifier, and the data type; and
the broadcast module 1702 is specifically configured to broadcast, by using SIB broadcast, the first message to the terminal.

Optionally, the first message further includes a second data packet, and the processing module 1703 is configured to determine the visual field of the first message, where the visual field includes the second data packet, the second data packet includes the first identifier and the data type, or the second data packet includes the first identifier, the subsequent first identifier of the first identifier, and the data type; and the second data packet is used to indicate the first data packet; and
the broadcast module 1702 is specifically configured to broadcast, by using the SIB broadcast, the first data packet in the first message to the terminal.

Optionally, the second data packet includes scheduling information that indicates a resource location of the third data packet.

Optionally, the transceiver module 1701 is further configured to receive a first request message sent by the server; and
the transceiver module 1701 is further configured to send a first response message to the server based on the first request message, where the first response message carries configuration information of a system information block SIB or SI, and the configuration information of the SIB or SI includes a size of a volume of sent data and/or a transmission period.

Optionally, the first request message carries a rate or a data volume size of the positioning assistance data, and the processing module 1703 is further configured to:
determine, based on the rate or the data volume size of the positioning assistance data, the configuration information of the SIB or SI; and
the transceiver module 1701 is specifically configured to:
   send the first response message to the server.

The base station according to the embodiments of this application is described above. The following describes a server according to the embodiments of this application. FIG. 18 is a schematic diagram of the server according to the embodiments of this application. The server may include:
a processing module 1801, configured to generate a first message, where the first message carries a first data packet including positioning assistance data; and
a transceiver module 1802, configured to send the first message to a base station, to enable the base station to broadcast the first data packet in the first message to a terminal, and to enable the terminal to calculate positioning information of the terminal based on the positioning assistance data.

Optionally, the first message carries a first identifier, and the first identifier is used to identify a location that is of a subset of the positioning assistance data in the first data packet in the first message and that is in the positioning assistance data.

Optionally, the first message further carries a data type of the positioning assistance data in the first message, and the data type is used to distinguish between different types of the positioning assistance data.

Optionally, the data type is a data type determined based on a type of a global navigation satellite system GNSS; or
the data type is a data type determined based on the GNSS type and at least one of a transmission frequency band and a positioning method; or
the data type is a type determined based on different first parameters.

Optionally, the first message further includes a null packet indication, and the first message including the null packet indication does not include the positioning assistance data.

Optionally, the first message further includes a retransmission indication, the retransmission indication is used to indicate that the first message is a message of data type retransmission, and the broadcast module is further configured to:
retransmit, by using the first message that does not include the positioning assistance data, the first message of a preset data type.

Optionally, the first message further includes version information of a standard used by the positioning assistance data.

Optionally, the positioning assistance data includes public assistance data and GNSS assistance data, and the GNSS assistance data corresponds to the data type of the positioning assistance data; or
the positioning assistance data includes public assistance data and satellite-based augmentation system SBAS assistance data in GNSS assistance data, and the SBAS assistance data in the GNSS assistance data corresponds to the data type of the positioning assistance data.

Optionally, the processing module 1801 is further configured to encrypt the first message; and
the transceiver module 1802 is further configured to send the encrypted first message to the base station.

Optionally, the server further includes:
a collection module 1803, configured to collect the positioning assistance data;
the transceiver module 1802 is further configured to send a first request message to the base station, where the first request message is used to obtain a rate or a data volume size of the positioning assistance data sent by the base station; and
the transceiver module 1802 is further configured to receive a first response message sent by the base station, where the first response message carries configuration information of a system information block SIB or SI, and the configuration information of the SIB or SI includes a size of a volume of sent data volume and/or a transmission period.

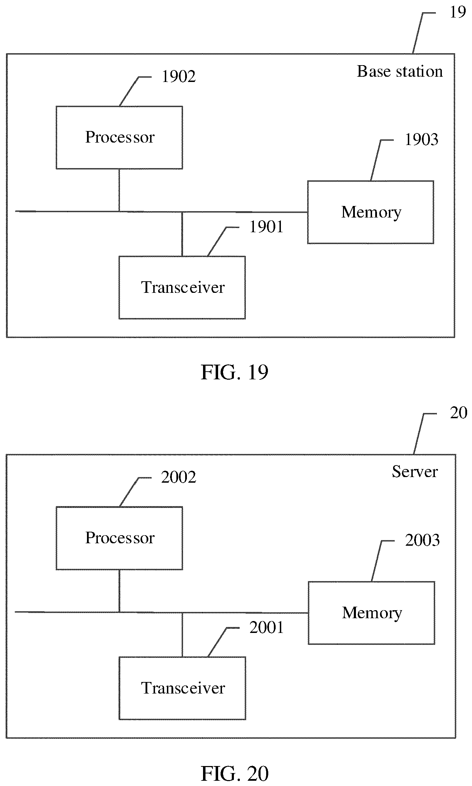

The server according to the embodiments of this application is described above. The following describes a structure of a base station according to the embodiments of this application. FIG. 19 is a diagram of an embodiment of a device according to the embodiments of this application. Abase station 19 may include at least one processor 1902, at least one transceiver 1901, and a memory 1903 that are connected. The base station in the embodiments of this application may include more or fewer components than those shown in FIG. 19, and two or more components may be combined, or there may be different component configurations or arrangements. Each component may be implemented by hardware including one or more signal processing and/or application-specific integrated circuits, software, or a combination of the hardware and the software.

Specifically, for the embodiment shown in FIG. 17, the processor 1902 can implement the function of the processing module 1703 of the base station in the embodiment shown in FIG. 17, the transceiver 1901 can implement the functions of the transceiver module 1701 and the broadcast module 1702 of the base station in the embodiment shown in FIG. 8, and the memory 1903 is used for a program instruction and implements the data transmission method in the embodiment shown in FIG. 3 or FIG. 16 by executing the program instruction.

The server according to the embodiments of this application is described above. The following describes a structure of a server according to the embodiments of this application. FIG. 20 is a diagram of an embodiment of the server according to the embodiments of this application. A server 20 may include at least one processor 2002, at least one transceiver 2001, and a memory 2003 that are connected. The server in the embodiments of this application may include more or fewer components than those shown in FIG. 20, and two or more components may be combined, or there may be different component configurations or arrangements. Each component may be implemented by hardware including one or more signal processing and/or application-specific integrated circuits, software, or a combination of the hardware and the software.

Specifically, for the embodiment shown in FIG. 18, the processor 2002 can implement the function of the processing module 1801 of the server in the embodiment shown in FIG. 18, the transceiver 2001 can implement the function of the transceiver module 1802 of the device in the embodiment shown in FIG. 18, and the processor 2002 and the transceiver 2001 can be combined to implement the function of the collection module 1803. Specifically, the processor 2002 sends a data obtaining request to a third-party reference station through the transceiver 2001, the transceiver 2001 receives data fed back by the third-party reference station, and the processor 2002 obtains the positioning assistance data by calculation. The memory 1903 is used for a program instruction and implements the data transmission method in the embodiment shown in FIG. 3 or FIG. 16 by executing the program instruction.

All or some of the foregoing embodiments may be implemented by software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, and or the like) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A data transmission method, comprising:
receiving, by a base station, a first message sent by a server, wherein the first message carries a first data packet comprising positioning assistance data; and
broadcasting, by the base station, the first data packet in the first message to a terminal, to enable the terminal to calculate positioning information of the terminal based on the positioning assistance data.

2. The data transmission method according to claim 1, wherein the first message further carries a data type of the positioning assistance data in the first message, and the data type is used to distinguish between different types of the positioning assistance data.

3. The data transmission method according to claim 1 or 2, wherein the first message carries a first identifier, and the first identifier is used to identify the first data packet in the first message.

4. The data transmission method according to claim 3, wherein the data type is a data type determined based on a type of a global navigation satellite system GNSS; or
the data type is a data type determined based on the GNSS type and at least one of a transmission frequency band and a positioning method; or
the data type is a type determined based on different first parameters.

5. The data transmission method according to claim 4, wherein the first message further comprises a null packet indication, and the first message comprising the null packet indication does not comprise the positioning assistance data.

6. The data transmission method according to claim 5, wherein the first message further comprises a retransmission indication, the retransmission indication is used to indicate that the first message is a message of data type retransmission, and the method further comprises:
retransmitting, by the base station by using the first message that does not comprise the positioning assistance data, the first message of a preset data type.

7. The data transmission method according to any one of claims 4 to 6, wherein the first message further comprises version information of a standard used by the positioning assistance data.

8. The data transmission method according to claim 7, wherein the method further comprises:
broadcasting, by the base station, at least one of an end data packet indication, the first identifier, the positioning method, and the version information of the standard used by the positioning assistance data, to the terminal.

9. The data transmission method according to any one of claims 1 to 7, wherein the positioning assistance data comprises public assistance data and GNSS assistance data, and the GNSS assistance data corresponds to the data type of the positioning assistance data; or
the positioning assistance data comprises public assistance data and satellite-based augmentation system SBAS assistance data in GNSS assistance data, and the SBAS assistance data in the GNSS assistance data corresponds to the data type of the positioning assistance data.

10. The data transmission method according to any one of claims 3 to 9, wherein the broadcasting, by the base station, the first data packet in the first message to a terminal comprises:
determining, by the base station, a visual field of the first message, wherein the visual field comprises a packet header of the first data packet in the first message, the packet header comprises the first identifier and the data type, or the packet header comprises the first identifier, a subsequent first identifier of the first identifier, and the data type; and
broadcasting, by the base station by using system information block SIB broadcast, the first data packet in the first message to the terminal.

11. The data transmission method according to any one of claims 3 to 10, wherein the first message further comprises a second data packet, and the broadcasting, by the base station, the first data packet in the first message to a terminal comprises:
determining, by the base station, a visual field of the first message, wherein the visual field comprises the second data packet, the second data packet comprises the first identifier and the data type, or the second data packet comprises the first identifier, a subsequent first identifier of the first identifier, and the data type; and the second data packet is used to indicate the first data packet; and
broadcasting, by the base station by using SIB broadcast, the first data packet and the second data packet in the first message to the terminal.

12. The data transmission method according to claim 11, wherein the second data packet comprises scheduling information that indicates a resource location of the first data packet.

13. The data transmission method according to any one of claims 1 to 12, wherein before the receiving, by a base station, a first message sent by a server, the method further comprises:
receiving, by the base station, a first request message sent by the server; and
sending, by the base station based on the first request message, a first response message to the server, wherein the first response message carries configuration information of a system information block SIB or SI, and the configuration information of the SIB or SI comprises a size of a volume of sent data and/or a transmission period.

14. The data transmission method according to claim 13, wherein the first request message carries a rate or a data volume size of the positioning assistance data, and the sending, by the base station based on the first request message, a first response message to the server comprises:
determining, by the base station based on the rate or the data volume size of the positioning assistance data, the configuration information of the SIB or SI; and
sending, by the base station, the first response message to the server.

15. A data transmission method, comprising:
generating, by a server, a first message, wherein the first message carries a first data packet comprising positioning assistance data; and
sending, by the server, the first message to a base station, to enable the base station to broadcast the first data packet in the first message to a terminal, and to enable the terminal to calculate positioning information of the terminal based on the positioning assistance data.

16. The data transmission method according to claim 14, wherein the first message carries a first identifier, and the first identifier is used to identify the first data packet in the first message.

17. The data transmission method according to claim 15, wherein the first message further carries a data type of the positioning assistance data in the first message, and the data type is used to distinguish between different types of the positioning assistance data.

18. The data transmission method according to claim 17, wherein the data type is a data type determined based on a type of a global navigation satellite system GNSS; or
the data type is a data type determined based on the GNSS type and at least one of a transmission frequency band and a positioning method; or
the data type is a type determined based on different first parameters.

19. The data transmission method according to any one of claims 15 to 18, wherein before the sending, by the server, the first message to a base station, the method further comprises:
encrypting, by the server, the first message; and
the sending, by the server, the first message to a base station comprises:
sending, by the server, the encrypted first message to the base station.

20. The data transmission method according to any one of claims 15 to 19, wherein the method further comprises:
collecting, by the server, the positioning assistance data;
sending, by the server, a first request message to the base station, wherein the first request message is used to obtain a rate or a data volume size of the positioning assistance data sent by the base station; and
receiving, by the server, a first response message sent by the base station, wherein the first response message carries configuration information of a system information block SIB or SI, and the configuration information of the SIB or SI comprises a size of a volume of sent data and/or a transmission period.

21. Abase station, comprising:
a transceiver module, configured to receive a first message sent by a server, wherein the first message carries a first data packet comprising positioning assistance data; and
a broadcast module, configured to broadcast the first data packet in the first message to a terminal, to enable the terminal to calculate positioning information of the terminal based on the positioning assistance data.

22. The base station according to claim 21, wherein the first message further carries a data type of the positioning assistance data in the first message, and the data type is used to distinguish between different types of the positioning assistance data.

23. The base station according to claim 21 or 22, wherein the first message carries a first identifier, and the first identifier is used to identify the first data packet in the first message.

24. The base station according to claim 23, wherein the data type is a data type determined based on a type of a global navigation satellite system GNSS; or
the data type is a data type determined based on the GNSS type and at least one of a transmission frequency band and a positioning method; or
the data type is a type determined based on different first parameters.

25. The base station according to claim 24, wherein the first message further comprises a null packet indication, and the first message comprising the null packet indication does not comprise the positioning assistance data.

26. The base station according to claim 25, wherein the first message further comprises a retransmission indication, the retransmission indication is used to indicate that the first message is a message of data type retransmission, and the broadcast module is further configured to:
retransmit, by using the first message that does not comprise the positioning assistance data, the first message of a preset data type.

27. The base station according to any one of claims 23 to 26, wherein the first message further comprises version information of a standard used by the positioning assistance data.

28. The base station according to claim 27, wherein the broadcast module is further configured to:
broadcast at least one of an end data packet indication, the first identifier, the positioning method, and the version information of the standard used by the positioning assistance data, to the terminal.

29. The base station according to any one of claims 21 to 26, wherein the positioning assistance data comprises public assistance data and GNSS assistance data, and the GNSS assistance data corresponds to the data type of the positioning assistance data; or
the positioning assistance data comprises public assistance data and satellite-based augmentation system SBAS assistance data in the GNSS assistance data, and the SBAS assistance data in the GNSS assistance data corresponds to the data type of the positioning assistance data.

30. The base station according to any one of claims 24 to 29, wherein the base station further comprises a processing module, configured to determine a visual field of the first message, wherein the visual field comprises a packet header of the first data packet in the first message, the packet header comprises the first identifier and the data type, or the packet header comprises the first identifier, a subsequent first identifier of the first identifier, and the data type; and
the broadcast module is specifically configured to broadcast, by using SIB broadcast, the first data packet in the first message to the terminal.

31. The base station according to any one of claims 24 to 29, wherein the first message further comprises a second data packet, and the base station further comprises a processing module, configured to determine a visual field of the first message, wherein the visual field comprises the second data packet, the second data packet comprises the first identifier and the data type, or the second data packet comprises the first identifier, a subsequent first identifier of the first identifier, and the data type; and the second data packet is used to indicate the first data packet; and
the broadcast module is specifically configured to broadcast, by using SIB broadcast, the first data packet and the second data packet in the first message to the terminal.

32. The base station according to claim 30, wherein the second data packet comprises scheduling information that indicates a resource location of the first data packet.

33. The base station according to any one of claims 22 to 32, wherein the transceiver module is further configured to receive a first request message sent by the server; and
the transceiver module is further configured to send a first response message to the server based on the first request message, wherein the first response message carries configuration information of a system information block SIB or SI, and the configuration information of the SIB or SI comprises a size of a volume of sent data and/or a transmission period.

34. The base station according to claim 33, wherein the first request message carries a rate or a data volume size of the positioning assistance data, and the processing module is further configured to:
determine, based on the rate or the data volume size of the positioning assistance data, the configuration information of the SIB or SI; and
the transceiver module is specifically configured to:
send the first response message to the server.

35. A server, comprising:
a processing module, configured to generate a first message, wherein the first message carries a first data packet comprising positioning assistance data; and
a transceiver module, configured to send the first message to a base station, to enable the base station to broadcast the first data packet in the first message to a terminal, and to enable the terminal to calculate positioning information of the terminal based on the positioning assistance data.

36. The server according to claim 35, wherein the first message carries a first identifier, and the first identifier is used to identify the first data packet in the first message.

37. The server according to claim 36, wherein the first message further carries a data type of the positioning assistance data in the first message, and the data type is used to distinguish between different types of the positioning assistance data.

38. The server according to claim 37, wherein the data type is a data type determined based on a type of a global navigation satellite system GNSS; or
the data type is a data type determined based on the GNSS type and at least one of a transmission frequency band and a positioning method; or
the data type is a type determined based on different first parameters.

39. The server according to any one of claims 35 to 38, wherein the processing module is further configured to encrypt the first message; and
the transceiver module is further configured to send the encrypted first message to the base station.

40. The server according to any one of claims 36 to 39, wherein the server further comprises:
a collection module, configured to collect the positioning assistance data;
the transceiver module is further configured to send a first request message to the base station, wherein the first request message is used to obtain a rate or a data volume size of the positioning assistance data sent by the base station; and
the transceiver module is further configured to receive a first response message sent by the base station, wherein the first response message carries configuration information of a system information block SIB or SI, and the configuration information of the SIB or SI comprises a size of a volume of sent data and/or a transmission period.

41. A computer readable storage medium, comprising an instruction, wherein when the instruction is run on a computer, the computer is enabled to perform the packet processing method according to any one of claims 1 to 14 or the packet processing method according to any one of claims 15 to 20.

42. A computer program product comprising an instruction, wherein when the computer program product is run on a computer, the computer is enabled to perform the packet processing method according to any one of claims 1 to 14 or the packet processing method according to any one of claims 15 to 20.
